# EUROPÄISCHE PATENTANMELDUNG

(11) **EP 4 297 247 A1**
(43) Veröffentlichungstag der Anmeldung: **27.12.2023**
(21) Anmeldenummer: 23180524.3
(22) Anmeldetag: 21.06.2023
(51) Int. Cl.: H02K 3/50, H02K 3/52, H02K 3/28

(54) **SCHALTSCHEIBE ZUR KONTAKTIERUNG VON WICKLUNGEN MIT EINER LEITERPLATTE**

(30) Priorität: 24.06.2022 DE 102022115852
(71) Anmelder: ebm-papst Mulfingen GmbH & Co. KG, 74673 Mulfingen (DE)
(72) Erfinder: WALTER, Manuel, 74523 Schwäbisch Hall (DE); LETTER, Tobias, 97980 Bad Mergentheim (DE); Schmidt, Madlene, 97999 Igersheim (DE)
(74) Vertreter: Staeger & Sperling Partnerschaftsgesellschaft mbB

(57) **Zusammenfassung**

Die Erfindung betrifft eine Schaltscheibe (1) zur Kontaktierung von um eine Rotationsachse (X) angeordneten Wicklungen (32) eines Stators (2) eines Elektromotors mit einer Leiterplatte des Elektromotors, wobei die Schaltscheibe (1) eine die Rotationsachse (X) ringförmig umlaufende Tragstruktur (10) und mehrere Kontaktanordnungen (20) zur Kontaktierung der Wicklungen (32) mit der Leiterplatte aufweist, welche von der Tragstruktur (10) gehalten werden, wobei die Kontaktanordnungen (20) jeweils durch einen Wicklungskontakt (21) zur Kontaktierung einer der Wicklungen (20), einem dazu in Radialrichtung (R) versetzten Leiterplattenkontakt (23) zur Kontaktierung der Leiterplatte sowie einem in Radialrichtung (R) verlaufenden und den Wicklungskontakt (21) mit dem Leiterplattenkontakt (23) elektrisch verbindenden Koppelelement (22) gebildet sind.

## Beschreibung

Die Erfindung betrifft eine Schaltscheibe zur Kontaktierung von um eine Rotationsachse angeordneten Wicklungen eines Stators eines Elektromotors mit einer Leiterplatte des Elektromotors, eine Statoreinheit aus Stator und Schaltscheibe sowie einen Elektromotor mit einer solchen Schaltscheibe bzw. einer solchen Statoreinheit.

Aus dem Stand der Technik ist eine Vielzahl von verschiedenen Elektromotoren bekannt, welche oftmals eine Schaltscheibe zur elektrischen Kontaktierung der Wicklungen bzw. der Wicklungsstränge des Stators mit einer Leiterplatte bzw. einer darauf angeordneten Elektronik vorsehen.

Die Schaltscheibe weist hierfür meist auf einem einzelnen vorbestimmten Teilkreis sich ausschließlich in Axialrichtung erstreckende Kontakte auf, welche an einem ersten axialen Ende mit der Leiterplatte und dem zweiten axialen Ende mit einer Wicklung bzw. einem Wicklungsstrang verbunden sind.

Für Statoren mit unterschiedlichen Durchmessern müssen jeweils darauf angepasste Schaltscheiben und Leiterplatten bereitgestellt werden, sodass also die Leiterplatte mit dem Stator bzw. den Wicklungen kontaktiert werden kann. Obwohl also die auf den Leiterplatten verbaute Elektronik oftmals bei verschiedenen Typen von Statoren übereinstimmt, muss aufgrund des unterschiedlichen Statordurchmessers jeweils ein bestimmter Typ von Leiterplatte bereitgestellt werden, was zu erhöhten Produktionskosten führt.

Der Erfindung liegt deshalb die Aufgabe zugrunde, die vorgenannten Nachteile zu überwinden und eine Schaltscheibe zur Kontaktierung von um eine Rotationsachse angeordneten Wicklungen eines Stators eines Elektromotors mit einer Leiterplatte des Elektromotors bereitzustellen, durch welche eine Leiterplatte bzw. ein Typ einer Leiterplatte mit verschiedenen Typen von Statoren bzw. mit Statoren unterschiedlicher Durchmesser kontaktierbar wird.

Diese Aufgabe wird durch die Merkmalskombination gemäß Patentanspruch 1 gelöst.

Erfindungsgemäß wird daher eine Schaltscheibe zur Kontaktierung von um eine Rotationsachse angeordneten Wicklungen eines Stators eines Elektromotors mit einer Leiterplatte des Elektromotors vorgeschlagen. Die Schaltscheibe weist eine die Rotationsachse ringförmig umlaufende Tragstruktur und mehrere Kontaktanordnungen zur Kontaktierung der Wicklungen mit der Leiterplatte auf, welche von der Tragstruktur gehalten werden. Weiter sind die Kontaktanordnungen jeweils durch einen Wicklungskontakt zur Kontaktierung einer der Wicklungen, einem dazu in Radialrichtung versetzten Leiterplattenkontakt zur Kontaktierung der Leiterplatte sowie einem in Radialrichtung verlaufenden und den Wicklungskontakt mit dem Leiterplattenkontakt elektrisch verbindenden Koppelelement gebildet.

Eine Grundidee der Erfindung ist es dabei, dass die Schaltscheibe einen Adapter zwischen einem einheitlichen Typ von Leiterplatte für verschiedene Typen von Statoren bildet, welche sich insbesondere in ihrem Durchmesser unterscheiden. Entsprechend muss für verschiedene Statoreinheiten bzw. Elektromotoren nicht sowohl eine darauf angepasste Schaltscheibe als auch eine darauf angepasste Leiterplatte, sondern lediglich eine auf den Stator angepasste Schaltscheibe bereitgestellt werden.

Anders ausgedrückt kann durch das Verlegen der Leiterplattenkontakte auf einen insbesondere kleineren Teilkreisdurchmesser als die Wicklungskontakte, welche die eigentliche Statorkontaktierung bilden, die Position der Leiterplattenkontakte vereinheitlicht werden. Hierfür wird eine Kontaktanordnung mit einer abgewinkelten Form eingesetzt, wobei die Koppelelemente den sich durch die unterschiedlichen Teilkreisdurchmesser ergebenden radialen Versatz ausgleichen. Die Kontaktanordnungen, welche in der Tragstruktur fixiert sind, stellen die Kontaktierung zwischen einer Wicklung bzw. einem Wicklungsstrang und der Leiterplatte her.

Eine vorteilhafte Weiterbildung der Schaltscheibe sieht vor, dass der Wicklungskontakt und der Leiterplattenkontakt der Kontaktanordnungen jeweils als zwei voneinander getrennte Teile ausgebildet sind. Dadurch können sie getrennt voneinander in bzw. an der Tragstruktur angeordnet und fixiert werden. Ferner kann zumindest einer der Kontakte auch bei unterschiedlichen Schaltscheiben für verschiedene Typen von Statoren verwendet werden.

Weiter ist eine Variante von Vorteil, bei welcher die Koppelelemente jeweils einteilig und/oder einstückig mit dem jeweiligen Wicklungskontakt oder dem jeweiligen Leiterplattenkontakt ausgebildet sind.

Zudem kann die Tragstruktur für jede der Kontaktanordnungen einen jeweiligen Aufnahmeraum aufweisen, in welchem der jeweilige Wicklungskontakt, der jeweilige Leiterplattenkontakt und das jeweilige Koppelelement anordenbar sind und insbesondere lösbar gehalten werden. Durch das lösbare Halten in dem Aufnahmeraum kann eine Vormontage realisiert werden, wobei die Komponenten im Rahmen einer gegebenenfalls folgenden Endmontage endgültig in dem Aufnahmeraum bzw. an der Tragstruktur fixiert werden können.

Zur Anordnung der Kontaktanordnung in dem Aufnahmeraum ist dieser weiter vorzugsweise in Axialrichtung offen. Dabei ist eine Variante besonders vorteilhaft, bei welcher der Aufnahmeraum zu einer Seite offen ist, welche in einem montierten Zustand der Schaltscheibe zu dem Stator gewandt ist.

Der Aufnahmeraum, der Wicklungskontakt, der Leiterplattenkontakt und das Koppelelement sind zudem vorzugsweise korrespondierend zueinander ausgebildet sowie der Wicklungskontakt, der Leiterplattenkontakt und das Koppelelement in Axialrichtung in den Aufnahmeraum einsteckbar.

Um zumindest einzelne Komponenten der Kontaktanordnung, d.h. insbesondere Wicklungskontakt, Leiterplattenkontakt und Koppelelement, in dem Aufnahmeraum zu halten, kann weiter vorgesehen sein, dass die Schaltscheibe ferner ein insbesondere in dem Aufnahmeraum angeordnetes und weiter insbesondere als Rasthaken ausgebildetes Befestigungselement aufweist. Das Befestigungselement ist ausgebildet, den Wicklungskontakt und/oder den Leiterplattenkontakt und/oder das Koppelelement in dem Aufnahmeraum und/oder allgemein an der Tragstruktur zu halten. Dabei können auch mehrere Befestigungselemente für eine Komponente der Kontaktanordnung oder zumindest ein Befestigungselement für verschiedene Komponenten der Kontaktanordnung vorgesehen sein.

Der Leiterplattenkontakt kann die Tragstruktur zudem an einem Durchtrittspunkt in Axialrichtung durchdringen. Vorzugsweise ist hierbei vorgesehen, dass die Tragstruktur an dem Durchtrittspunkt einen sich in Axialrichtung erstreckenden Verpressfortsatz ausbildet, welcher zur Fixierung und Abdichtung des Leiterplattenkontakts um den Leiterplattenkontakt verpressbar ist.

Zudem können der Wicklungskontakt und/oder der Leiterplattenkontakt und/oder das Koppelelement als Stanzbiegeteil ausgebildet sein.

Zur Kontaktierung des Koppelelements mit dem Wicklungs- oder dem Leiterplattenkontakt weist das Koppelelement bei einer weiteren Variante der Schaltscheibe einen ersten Anbindungsabschnitt auf, welcher in einer in Radialrichtung verlaufenden ersten Ebene verläuft. Korrespondierend dazu weist der Wicklungskontakt oder der Leiterplattenkontakt einen zweiten Anbindungsabschnitt auf, welcher in einer dazu orthogonalen zweiten Ebene verläuft. Der erste Anbindungsabschnitt und der zweite Anbindungsabschnitt sind beispielsweise durch eine Schlitzung zumindest einer der Anbindungsabschnitte kreuzend ineinander einsteckbar.

Zur Kontaktierung mit den Wicklungen können die Wicklungskontakte ferner jeweils Schneidklemmkontakte aufweisen bzw. insbesondere wicklungsseitig als solche ausgebildet sein.

Durch den radialen Versatz zwischen Leiterplattenkontakt und Wicklungskontakt bzw. durch die unterschiedlichen Teilkreisdurchmesser auf welchen Leiterplatten- und Wicklungskontakt liegen, kann es vorkommen, dass insbesondere der Leiterplattenkontakt bei einem nachfolgenden Umpressen des Stators ungestützt abgedichtet werden muss, da dieser nicht wie oftmals üblich am Wicklungskontakt gestützt werden kann. Um dieses Problem zu überwinden sieht eine vorteilhafte Variante vor, dass die Tragstruktur eine radialäußere Stützstruktur und eine radialinnere Stützstruktur aufweist, von welchen zumindest eine die Rotationsachse insbesondere ringförmig umlaufend ausgebildet ist. Die radialäußere Stützstruktur und/oder die radialinnere Stützstruktur sind hierbei ausgebildet, die Tragstruktur auf einer ersten Seite an dem Stator gegen eine von der in Axialrichtung gegenüberliegenden Seite wirkende Kraft abzustützen. Diese Kraft kann insbesondere bei einem Abdichten und/oder Verpressen des Verpressfortsatzes um den Leiterplattenkontakt auftreten.

Die radialäußere Stützstruktur und die radialinnere Stützstruktur können durch sich in Radialrichtung erstreckende Stege verbunden sein, wobei die radialäußere Stützstruktur und/oder die radialinnere Stützstruktur zusätzlich sich in Radialrichtung erstreckende Versteifungsvorsprünge aufweisen.

Ein weiterer Aspekt der Erfindung betrifft eine Statoreinheit aus einem Stator und einer erfindungsgemäßen Schaltscheibe mit einer radialinneren und einer radialäußeren Stützstruktur. Der Stator weist eine Vielzahl von Statorzähnen auf, welche jeweils mit einer Wicklung umwickelt sind. Ferner sind die Statorzähne durch eine Kapselung eingehaust, auf welcher die Wicklungen angeordnet bzw. gewickelt sind. Die radialäußere Stützstruktur liegt radialaußen auf der Kapselung auf und die radialinnere Stützstruktur liegt radialinnen auf der Kapselung auf.

Dabei kann ferner vorgesehen sein, dass die Kapselung radialinnen einen in Umfangsrichtung verlaufenden Verlegekanal zur Aufnahme eines die Wicklungen bildenden Drahtes aufweist, welcher insbesondere die zu einem Wicklungsstrang gehörenden Wicklungen miteinander verbindet. Eine in Umfangsrichtung verlaufende Wandung des Verlegekanals bildet in Axialrichtung eine Auflagefläche zur Auflage der radialinneren Stützstruktur.

Zusätzlich oder alternativ zu einem solchen Verlegekanal kann die Kapselung radialinnen sich nach radialaußen erstreckende Stege ausbilden, welche in Axialrichtung jeweils eine weitere Auflagefläche zur Auflage der radialinneren Stützstruktur bilden.

Beispielsweise kann vorgesehen sein, dass sich der Verlegekanal in Umfangsrichtung nur abschnittsweise und nicht vollständig um die Rotationsachs erstreckt und in dem verbleibenden Abschnitt, in welchem kein Verlegekanal verläuft, eine Vielzahl von sich nach radialaußen erstreckende Stege von der Kapselung ausgebildet werden. Gemeinsam durch den Verlegekanal und die Stege werden dann Auflageflächen zur Auflage der radialinneren Stützstruktur bereitgestellt.

Zudem betrifft ein Aspekt der Erfindung einen Elektromotor mit einer erfindungsgemäßen Statoreinheit und/oder einer erfindungsgemäßen Schaltscheibe.

Neben der Schaltscheibe an sich ist ein Aspekt der Erfindung zudem ein System aus einem Typ von Leiterplatte und einer Vielzahl von Typen von Statoreinheiten und/oder einer Vielzahl von Typen von erfindungsgemäßen Schaltscheiben. Wesentlich dabei ist, dass der Typ von Leiterplatte auf einem ersten Teilkreis mit einem ersten Durchmesser Kontakte bzw. Anschlusspunkte zur Kontaktierung der Typen von Schaltscheiben aufweist und die unterschiedlichen Typen von Schaltscheiben jeweils die Leiterplattenkontakte zur Kontaktierung der Kontakte der Leiterplatte auf dem ersten Teilkreis und die Wicklungskontakte zur Kontaktierung der Wicklungen bzw. der Anschlusspunkte der Wicklungen auf einem zweiten Teilkreis aufweisen. Der Durchmesser des zweiten Teilkreises unterscheidet sich dabei von Typ zu Typ der Schaltscheiben bzw. von Typ zu Typ des Stators, sodass also die Schaltscheibe einen Adapter zwischen einem einzigen Typ von Leiterplatte und verschiedenen, sich insbesondere in ihrem Durchmesser unterscheidenden Typen von Statoren bildet.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Längsschnitt durch eine Statoreinheit;
- Fig. 2: eine Detailansicht der Statoreinheit;
- Fig. 3: eine perspektivische Darstellung einer Schaltscheibe;
- Fig. 4: eine Detailansicht auf die Schaltscheibe.

Die Figuren sind beispielhaft schematisch. Gleiche Bezugszeichen in den Figuren weisen auf gleiche funktionale und/oder strukturelle Merkmale hin.

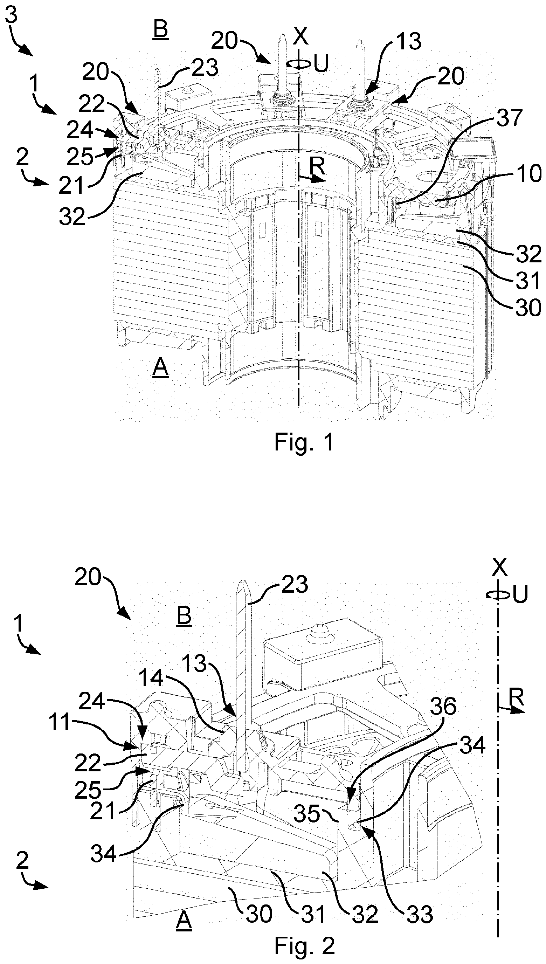

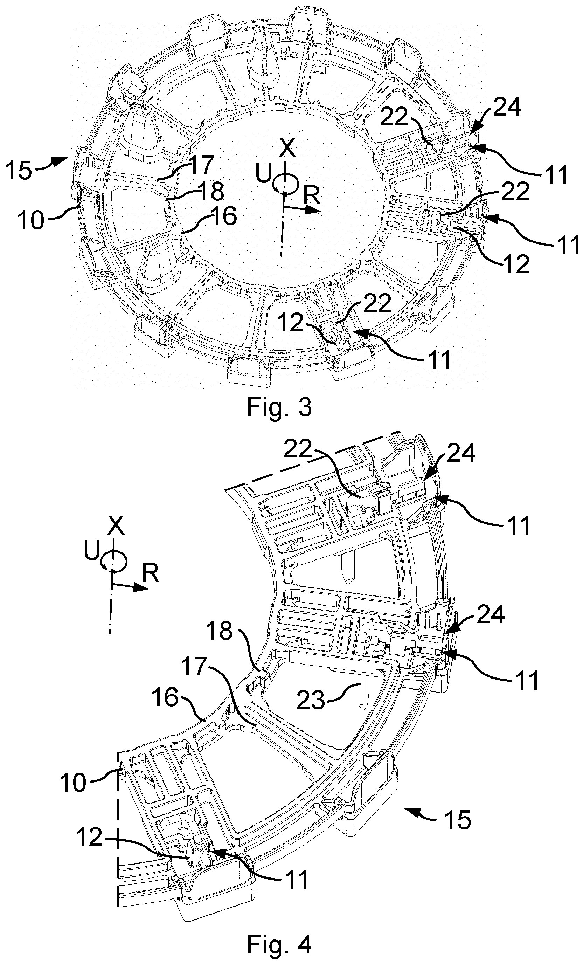

Bei der in den Figuren 3 und 4 dargestellten Schaltscheibe 1 kann es sich insbesondere um die Schaltscheibe 1 der Statoreinheit 3 gemäß den Figuren 1 und 2 handeln, sodass die Beschreibung analog gilt.

Bei der in Figur 1 im Längsschnitt dargestellten Statoreinheit 3 handelt es sich um die Statoreinheit 3 eines Außenläufermotors mit einem Stator 2 und einer in Axialrichtung d.h. entlang der Rotationsachse X daran angeordneten Schaltscheibe 1. Der Stator 2 weist eine Vielzahl von in Umfangsrichtung U um die Rotationsachse X angeordneten und sich in Radialrichtung R erstreckenden Statorzähnen 30 auf, welche durch eine Kapselung 31 umgeben sind. Die Kapselung 31 kann insbesondere durch Umspritzen der Statorzähne 30 bzw. des die Statorzähne 30 bildenden Statorpakets hergestellt werden. Auf den durch die Kapselung 31 abgedeckten Statorzähnen 30 sind durch einen Draht 34 bzw. mehrere Drähte 34 gebildete Wicklungen 32 angeordnet. Insbesondere gehören mehrere Wicklungen 32 zu einem Wicklungsstrang, dessen Wicklungen 32 durch den Draht 34 verbunden sind.

Je Wicklungsstrang ist eine Kontaktierung mit der nicht dargestellten Leiterplatte erforderlich, sodass je Wicklungsstrang eine Kontaktanordnung 20 und vorliegend entsprechend drei Kontaktanordnungen 20 vorgesehen sind, wobei der Schnitt durch eine der Kontaktanordnungen 20 verläuft.

Verschiedene Typen von Statoren 2 können in ihrem Durchmesser bzw. Radius, in der Anzahl der Statorzähne 30 und der darauf angeordneten Wicklungen 32 aber auch in der Anzahl der Wicklungsstränge und der entsprechend erforderlichen Kontaktanordnungen 20 abweichen.

Um für verschiedene Typen von Statoren 2 nicht jeweils einen eigenen Typ von Leiterplatte bereitstellen zu müssen, welche insbesondere bezüglich des Durchmessers analog zu dem Stator 2 ausgebildet sein müssen, ist eine Schaltscheibe 1 vorgesehen, welche einen radialen Versatz zwischen Anschlusspunkten einer einheitlichen Leiterplatte d.h. einem Typ von Leiterplatte und Anschlusspunkten der Wicklungen 32 des jeweiligen Typs von Stators 2 ausgleicht.

Bei der in den Figuren dargestellten Ausführung liegen die durch den Draht 34 gebildeten Anschlusspunkte der Wicklungen 32 des Stators 2 in Radialrichtung R d.h. radial außerhalb der durch den einheitlichen Typ von Leiterplatte bereitgestellten Anschlusspunkte.

Um diesen Versatz auszugleichen weist die Schaltscheibe 1 je Anschlusspunkt des Stators 2 d.h. je Wicklungsstrang eine Kontaktanordnung 20 und hier konkret drei Kontaktanordnungen 20 auf, welche jeweils durch einen Wicklungskontakt 21 zum Anschluss an eine Wicklung 32, einen Leiterplattenkontakt 23 zum Anschluss an die Leiterplatte und ein Koppelelement 22 gebildet sind.

Die Anschlusspunkte des Stators 2 d.h. die durch Drähte 34 gebildeten Anschlusspunkte der Wicklungen 32 liegen auf einem ersten Radius, die Anschlusspunkte der Leiterplatte liegen auf einem dazu kleineren zweiten Radius. Entsprechend sind die Wicklungskontakte 21 auf dem ersten Radius und die Leiterplattenkontakte 23 auf dem zweiten Radius angeordnet, wobei die Radien ebenfalls als Durchmesser oder Teilkreisdurchmesser angegeben werden können.

Das Koppelelement 22 ist jeweils ausgebildet, den Versatz in Radialrichtung R zwischen dem ersten Radius und dem zweiten Radius auszugleichen, sodass es sich in Radialrichtung R erstreckt und den jeweiligen Wicklungskontakt 21 elektrisch mit dem jeweiligen Leiterplattenkontakt 23 verbindet.

Bei der vorliegend dargestellten Variante ist das Koppelelement 22 jeweils integral d.h. einstückig und einteilig mit dem Leiterplattenkontakt 23 ausgebildet, was insbesondere aus einer Zusammenschau der Figuren deutlich wird und in Figur 4 klar ersichtlich ist.

Das Koppelelement 22 und der Leiterplattenkontakt 23 sind zudem als abgewinkeltes Stanzbiegeteil bereitgestellt.

Die Kontaktanordnungen 20 werden an einer Tragstruktur 10 der Schaltscheibe 1 gehalten, welche vorliegend insbesondere aus einer radialinneren Stützstruktur 16 und einer radialäußeren Stützstruktur 15 gebildet ist, welche durch in Radialrichtung R verlaufende Stege 17 miteinander verbunden sind.

Die Tragstruktur 10 bildet je Kontaktanordnung 20 einen Aufnahmeraum 11 aus, welcher in Axialrichtung zu einer ersten Seite A, welche in dem in Figur 1 gezeigten montierten Zustand zu dem Stator 2 weist, offen und zu einer gegenüberliegenden zweiten Seite B, welche von dem Stator 2 abgewandt ist, verschlossen ist.

In diesem Aufnahmeraum 11 ist das Koppelelement 22 angeordnet und wird in diesem durch ein als Rasthaken 12 ausgebildetes Befestigungselement 12 gehalten, sodass also das Koppelelement 22 bei einem Einstecken in Axialrichtung in den Aufnahmeraum 11 mit dem Rasthaken 12 verrastet.

Der sich in Axialrichtung erstreckende Leiterplattenkontakt 23 durchläuft dabei die Tragstruktur 10 bzw. den Aufnahmeraum 11 von der ersten Seite A zu der zweiten Seite B und tritt an der zweiten Seite B jeweils an einem Durchtrittspunkt 13 aus der Tragstruktur 10 hervor.

Zur Abdichtung des Leiterplattenkontakts 23 gegenüber der Tragstruktur 10 und zur weiteren bzw. endgültigen Fixierung des Leiterplattenkontakts 23 an der Tragstruktur 10 ist an dem Durchtrittspunkt 13 jeweils ein Verpressfortsatz 14 vorgesehen, welcher durch Kraftbeaufschlagung mit dem Leiterplattenkontakt 23 verpresst werden kann.

Zur elektrischen Kontaktierung der Wicklungen 32 bzw. deren Anschlusspunkte, welche durch einen Draht 34 der Wicklungen 32 gebildet werden, wie insbesondere in Figur 2 dargestellt ist, sind die Wicklungskontakte 21 als Schneidklemmkontakte ausgebildet. Weiter sind die Wicklungskontakte 21 zur elektrischen Kontaktierung mit dem jeweiligen Koppelelement 22 auf dieses in Axialrichtung aufsteckbar.

Hierzu weist das Koppelelement 22 einen klingenartig ausgebildeten Anbindungsabschnitt 24 auf, auf welchen der jeweilige Wicklungskontakt 21 mit einem dazu korrespondierenden Anbindungsabschnitt 25, welcher geschlitzt ist, aufsteckbar ist.

In dem Anbindungsabschnitt 24 des Koppelelements 22 kann zudem eine Ausnehmung ausgebildet sein, welche das Koppelelement 22 in Umfangsrichtung U zumindest teilweise durchläuft. Der Wicklungskontakt 21 kann dann hierfür einen Vorsprung oder einen Rasthaken ausbilden, welcher in die Ausnehmung eingreift, sodass der Wicklungskontakt 21 dadurch an dem Koppelelement 22 fixierbar ist.

Bei herkömmlichen Schaltscheiben, bei welchen der Wicklungskontakt und der Leiterplattenkontakt gemeinsam als ein in Axialrichtung verlaufender Stab ausgebildet sind, kann eine beim Abdichten am Verpressfortsatz auftretende Kraft unmittelbar am Wicklungskontakt oder am äußeren Umfang der Tragstruktur abgestützt werden.

Davon abweichend weist die erfindungsgemäße Schaltscheibe 1 in der dargestellten Variante zur Abstützung solcher Kräfte an dem radialäußeren Umfang der Tragstruktur 10 die radialäußere Stützstruktur 15 und an dem radialinneren Umfang der Tragstruktur 10 die radialinnere Stützstruktur 16 auf. An der radialinneren Stützstruktur 16 sind ferner Versteifungsvorsprünge 18 ausgebildet, welche sich in Radialrichtung R nach außen erstrecken und die Tragstruktur 10 zusätzlich versteifen.

Die Kräfte treten insbesondere in einem Zustand auf, in welchem die Schaltscheibe 1 an dem Stator 2 angeordnet ist, sodass der Stator 2 vorzugsweise entsprechende Auflageflächen aufweist, auf welchen die radialinnere Stützstruktur 16 und die radialäußere Stützstruktur 15 aufliegen können.

Der Stator 2 stellt an seinem radialinneren Abschnitt einen Verlegekanal 33 bereit, in welchem der Draht 34 eines Wicklungsstranges von Wicklung 32 zu Wicklung 32 geführt werden kann. Dabei steht die in Umfangsrichtung U umlaufende Wandung 35 des Verlegekanals 33 in Axialrichtung über den in dem Verlegekanal 33 anordenbaren Draht 34 hinaus und bildet eine Auflagefläche 36, auf welcher die radialinnere Stützstruktur 16 aufliegen kann.

Der Verlegekanal 33 erstreckt sich jedoch, wie insbesondere in Figur 1 dargestellt, in Umfangsrichtung U nicht vollständig um die Rotationsachse R. Um jedoch ein stabiles Aufliegen der radialinneren Stützstruktur 16 auf der Kapselung 31 zu ermöglichen, bildet diese in dem Abschnitt, in welchem kein Verlegekanal 33 vorgesehen ist von radialinnen nach radialaußen verlaufende Stege 37 aus, welche die Kapselung 31 zusätzlich versteifen und in Axialrichtung jeweils eine Auflagefläche zur Auflage der radialinneren Stützstruktur 37 bereitstellen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Schaltscheibe (1) zur Kontaktierung von um eine Rotationsachse (X) angeordneten Wicklungen (32) eines Stators (2) eines Elektromotors mit einer Leiterplatte des Elektromotors,
wobei die Schaltscheibe (1) eine die Rotationsachse (X) ringförmig umlaufende Tragstruktur (10) und mehrere Kontaktanordnungen (20) zur Kontaktierung der Wicklungen (32) mit der Leiterplatte aufweist, welche von der Tragstruktur (10) gehalten werden,
wobei die Kontaktanordnungen (20) jeweils durch einen Wicklungskontakt (21) zur Kontaktierung einer der Wicklungen (20), einem dazu in Radialrichtung (R) versetzten Leiterplattenkontakt (23) zur Kontaktierung der Leiterplatte sowie einem in Radialrichtung (R) verlaufenden und den Wicklungskontakt (21) mit dem Leiterplattenkontakt (23) elektrisch verbindenden Koppelelement (22) gebildet sind.

2. Schaltscheibe nach Anspruch 1,
wobei der Wicklungskontakt (21) und der Leiterplattenkontakt (23) der Kontaktanordnungen jeweils als zwei voneinander getrennte Teile ausgebildet sind.

3. Schaltscheibe nach Anspruch 1 oder 2,
wobei das Koppelelement (22) jeweils einteilig und/oder einstückig mit dem jeweiligen Wicklungskontakt (21) oder dem jeweiligen Leiterplattenkontakt (23) ausgebildet ist.

4. Schaltscheibe nach einem der vorhergehenden Ansprüche,
wobei die Tragstruktur (10) für jede der Kontaktanordnungen (20) einen jeweiligen Aufnahmeraum (11) aufweist, in welchem der jeweilige Wicklungskontakt (21), der jeweilige Leiterplattenkontakt (23) und das jeweilige Koppelelement (22) insbesondere lösbar gehalten werden.

5. Schaltscheibe nach dem vorhergehenden Anspruch,
wobei der Aufnahmeraum (11) in Axialrichtung offen ist.

6. Schaltscheibe nach dem vorhergehenden Anspruch,
wobei der Aufnahmeraum (11), der Wicklungskontakt (21), der Leiterplattenkontakt (23) und das Koppelelement (22) korrespondierend zueinander ausgebildet sowie der Wicklungskontakt (21), der Leiterplattenkontakt (23) und das Koppelelement (22) in Axialrichtung in den Aufnahmeraum (11) einsteckbar sind.

7. Schaltscheibe nach einem der Ansprüche 4 bis 6,
ferner aufweisend ein insbesondere in dem Aufnahmeraum (11) angeordnetes und weiter insbesondere als Rasthaken (12) ausgebildetes Befestigungselement (12), welches ausgebildet ist, den Wicklungskontakt (21) und/oder den Leiterplattenkontakt (23) und/oder das Koppelelement (22) in dem Aufnahmeraum (11) zu halten.

8. Schaltscheibe nach einem der vorhergehenden Ansprüche,
wobei der Leiterplattenkontakt (23) die Tragstruktur (10) an einem Durchtrittspunkt (13) in Axialrichtung durchdringt,
wobei die Tragstruktur (10) an dem Durchtrittspunkt (13) einen sich in Axialrichtung erstreckenden Verpressfortsatz (14) ausbildet, welcher zur Fixierung und Abdichtung des Leiterplattenkontakts (23) um den Leiterplattenkontakt (23) verpressbar ist.

9. Schaltscheibe nach einem der vorhergehenden Ansprüche,
wobei der Wicklungskontakt (21) und/oder der Leiterplattenkontakt (23) und/oder das Koppelelement (22) als Stanzbiegeteil ausgebildet ist/sind.

10. Schaltscheibe nach einem der vorhergehenden Ansprüche,
wobei das Koppelelement (22) einen ersten Anbindungsabschnitt (24) aufweist, welcher in einer in Radialrichtung (R) verlaufenden ersten Ebene verläuft,
wobei der Wicklungskontakt (21) oder der Leiterplattenkontakt (23) einen dazu korrespondierenden zweiten Anbindungsabschnitt (25) aufweist, welcher in einer dazu orthogonalen zweiten Ebene verläuft,
und wobei der erste Anbindungsabschnitt (24) und der zweite Anbindungsabschnitt (25) kreuzend ineinander einsteckbar sind.

11. Schaltscheibe nach einem der vorhergehenden Ansprüche,
wobei die Tragstruktur (10) eine radialäußere Stützstruktur (15) und eine radialinnere Stützstruktur (16) aufweist, von welchen zumindest eine die Rotationsachse (X) insbesondere ringförmig umlaufend ausgebildet ist,
wobei die radialäußere Stützstruktur (15) und/oder die radialinnere Stützstruktur (16) ausgebildet sind, die Tragstruktur (10) auf einer ersten Seite (A) an dem Stator (2) gegen eine von der in Axialrichtung gegenüberliegenden Seite (B) wirkende Kraft abzustützen.

12. Schaltscheibe nach dem vorhergehenden Anspruch,
wobei die radialäußere Stützstruktur (15) und die radialinnere Stützstruktur (16) durch sich in Radialrichtung (R) erstreckende Stege (17) verbunden sind und wobei die radialäußere Stützstruktur (15) und/oder die radialinnere Stützstruktur (16) sich in Radialrichtung (R) erstreckende Versteifungsvorsprünge (18) aufweisen.

13. Statoreinheit (3) aus einem Stator (2) und einer Schaltscheibe (1) gemäß einem der vorhergehenden Ansprüche 11 oder 12,
wobei der Stator (2) eine Vielzahl von Statorzähnen (30) aufweist, welche jeweils mit einer Wicklung (32) umwickelt sind,
wobei die Statorzähne (30) durch eine Kapselung (31) eingehaust sind, auf welcher die Wicklungen (32) gewickelt sind,
wobei die radialäußere Stützstruktur (15) radialaußen auf der Kapselung (31) aufliegt und wobei die radialinnere Stützstruktur (16) radialinnen auf der Kapselung (31) aufliegt.

14. Statoreinheit nach dem vorhergehenden Anspruch,
wobei die Kapselung (31) radialinnen einen in Umfangsrichtung (U) verlaufenden Verlegekanal (33) zur Aufnahme eines die Wicklungen (33) bildenden Drahtes (34) aufweist, dessen in Umfangsrichtung (U) verlaufende Wandung (35) in Axialrichtung eine Auflagefläche (36) zur Auflage der radialinneren Stützstruktur (16) bildet,
und/oder wobei die Kapselung (31) radialinnen sich nach radialaußen erstreckende Stege (37) ausbildet, welche in Axialrichtung jeweils eine weitere Auflagefläche zur Auflage der radialinneren Stützstruktur (16) bilden.

15. System aus einem Typ von Leiterplatte und einer Vielzahl von Typen von Statoreinheiten (3) nach einem der beiden vorhergehenden Ansprüche und/oder einer Vielzahl von Typen von Schaltscheiben (1) gemäß einem der Ansprüche 1 bis 12, wobei der Typ von Leiterplatte auf einem ersten Teilkreis mit einem ersten Durchmesser Kontakte zur Kontaktierung der Typen von Schaltscheiben (1) aufweist, wobei die Typen von Schaltscheiben (1) jeweils die Leiterplattenkontakte (23) zur Kontaktierung der Kontakte der Leiterplatte auf dem ersten Teilkreis und die Wicklungskontakte (21) zur Kontaktierung der Wicklungen (32) auf einem zweiten Teilkreis aufweisen, welcher einen von Typ zu Typ der Schaltscheiben (1) unterschiedlichen zweiten Durchmesser aufweist, der insbesondere von dem ersten Durchmesser abweicht.
